# EUROPEAN PATENT SPECIFICATION

(11) **EP 4 517 629 B1**
(45) Date of publication and mention of the grant of the patent: **31.12.2025**
(21) Application number: 23020403.4
(22) Date of filing: 29.08.2023
(51) Int. Cl.: G06Q 20/06, G06Q 20/22, G06Q 20/36, G06Q 20/38, G06Q 20/40

(54) **SECURE TOKEN WALLET AND ELECTRONIC TRANSACTION SYSTEM**
SICHERE TOKEN-GELDBÖRSE UND ELEKTRONISCHES TRANSAKTIONSSYSTEM
PORTEFEUILLE À JETONS SÉCURISÉ ET SYSTÈME DE TRANSACTION ÉLECTRONIQUE

(43) Date of publication of application: 05.03.2025
(73) Proprietor: Giesecke+Devrient advance52 GmbH, 81677 München (DE)
(72) Inventor: Lars, Hupel, 81677 München (DE)
(74) Representative: Giesecke+Devrient IP

(56) References cited:
- CN-A- 108 234 133
- CN-A- 110 910 140
- US-A1- 2013 268 437
- US-A1- 2015 032 627
- US-A1- 2018 293 574
- US-A1- 2021 287 207
- US-B2- 11 704 660

## Description

The invention relates to a secure token wallet, to an electronic transaction system comprising a secure token wallet and to a method in such an electronic transaction system, particularly being a digital currency transaction system.

Tokens - also referred to as electronic coins, coin data sets - may represent a monetary value, in particular a digital currency, preferably a central bank digital currency, short CBDC. Electronic token transactions and/ or the storage of tokens must be safe and secure and so, means for protecting confidentiality and/or integrity and availability of exchanged and/or stored token data must be implemented. This is especially true for electronic payment transactions and associated payment transactions and payment storages in which a monetary value is linked with each token. Secure token wallets are thus used to exchange the tokens.

Different token wallet types exist. The presently most relevant token wallet types are hardware token wallets and hosted token wallets. Examples for hardware token wallets are smart cards, secure USB sticks, SIM cards, secure NFC elements or secure contactless tags. Hosted token wallets are provided by (or hosted on) a wallet service provider unit. Typically, the wallet service provider unit includes a plurality of hosted token wallets, which may be owned by different participants of the transaction system. WO 2023/011758 A1 relates to an improved wallet service provider unit comprising a plurality of hosted token wallets of a transaction system comprising a token register.

It is known that secure token wallets have to be exchanged or updated, if security measures change over the years. Typically, hardware token wallets would be exchanged and hosted token wallets would be updated. For example, in the field of SIM cards or NFC cards remote updates are partly used.

For a token wallet it now has been proposed that a wallet code of the token wallet and the token used in the token wallet may be updated independently from each other. For example, the wallet code may be improved without updating the token or the token may be updated without adaptation of the wallet code.

US 11704 660 B2 and US 2021/287207 A1 relate to a method that automatically provisions a new mobile device by transferring a token from the current device to the new mobile device. A new token may be created different than the initial token, wherein the initial token is used for updating a device-to-token mapping table for the new token.

CN 108 234 133 A relates to updating a wallet by replacing its key. US 2013/268437 A1 relates to upgrading widgets within a user interface wallet when a higher version is available. A minimum runtime version may identify minimal required wallet platform version and a version may identify version of the widget. US 2015/032627 A1 relates to the updating of tokens. A token life-cycle management module may delete, activate, deactivate, renew and update a token. US 2018/293574 A1 relates to updating the verification logic of a multi-signature wallet via an update module. The update module is configured to update the verification logic variable in the upgradeable wallet of the verification scheme to the verification logic address, and broadcast the update result of the verification logic variable to the Ethereum network.

According to an object of the invention, a token wallet and/or an electronic transaction system shall be provided with improved security, preferably the performance shall remain or even be improved.

The above-identified objectives are solved with the features of the independent patent claims. Further advantageous embodiments are described in the dependent patent claims.

According to an aspect of the present invention there is provided a secure token wallet of a transaction system, comprising:
- a token of the transaction system, wherein a token version of the token is an initial token version; and
- a token exchange management unit for exchanging tokens in transactions.

A token version for (of) the secure token wallet can be changed from the initial token version to a new token version. The secure token wallet is configured to change the token version for (of) the secure token wallet, if the new token version is detected in a transaction.

In other words, a transaction automatically triggers the change of the token version of the secure token wallet. The secure token wallet itself determines whether to change the token version. A rather unexpected advantage of the present approach is that the security in the transaction system is increased. A period of time of coexistence of both token versions in the system, can be significantly reduced. The coexistence period may require amendments and/or steps and/or services which are acceptable or required temporarily. The security of the transaction system may thus be affected by such temporary measures. The secure token wallet provided already supports at least both versions, the initial token version and the new token version (wherein it might support one or more further token versions). However, it uses the initial token version at least until detecting the new token version in the transaction. The (period of time is reduced and) the security is increased firstly, since the secure token wallet uses the initial token version (until the secure token wallet changes it), and secondly since the transaction based token version change spreads the token version change faster than an update based token version change.

Preferably, the secure token wallet further comprises a current token version data element, which indicates the currently used token version of the secure token wallet.

Hence, the current token version data element can be changed independently from the token(s) of the secure token wallet. In alternatives or variants, each token may comprise a token version data element, which indicates the token version of the token. The token version of a token may however be derivable from the token (e.g. derived from a total length, a length of data element, existence or content of a data element).

In addition or alternatively the secure token wallet may comprise a supported token versions data element, which indicates the token versions supported by the secure token wallet. The secure token wallet supports at least the initial and the new token version.

In preferred variants, the secure token wallet, in a preparation phase of the transaction with another token wallet, detects (in the step of detecting) that the other token wallet uses the new token version already and/or receives a token version information from the other token wallet. The secure token wallet may detect the new token version in the transaction preparation phase. The transaction preferably comprises at least the preparation phase and a subsequent token exchange phase. Preferably, the secure wallet detects that the token version information of the other wallet received from the other wallet corresponds to the new token version. In the preparation phase of the transaction the wallet and the other wallet may mutually exchange their token version information.

In an transaction one more tokens are exchanged. In the transaction one or more tokens may be received, or one or more tokens may be sent, or one or more tokens may be received and one or more tokens may be sent. Particularly, one or more tokens are received from another token wallet in the secure token wallet and/or one or more tokens are sent from the secure token wallet to another token wallet.

As indicated above, the secure wallet supports at least the two token versions, but may support three or more different token versions. In the transaction system two, three or more different token versions may be usable in parallel.

In improved variants token versions can be compared, preferably by subtraction or value comparison, to determine a newer one of the compared token versions. Preferably, the token version is a token version value, the token versions being ordered by value. The format of the token version, particularly in the token version information and/or current token version data element, supports the comparison. The secure token wallet may compare, preferably subtract, the received token version information with the token version of the secure token wallet, optionally stored in the current token version data element, thus the new(er) token version is simply detectable. The token version may be coded in one, two or more bytes. Preferably, the token version is coded by numbers. For example only, if the token version would be coded in two bytes, an initial token version could be 1.2 or 2.1 (formatted as "0x01 0x02" or "0x02 0x01") and a new token version could be 2.1 or 2.3 (formatted as "0x02 0x01" or "0x02 0x03") the values can be subtracted in the comparison. Other examples allowing subtraction could for example be based on token version values ordered by value, sequential token version values or single-bit-in-a-byte coding of the token version.

Tokens of the new and initial version differ in at least one token data element, particularly in length and/or in format and/or in content and/or in existence thereof. Hence, an existing data element (such as signature) in the new(er) token version may e.g. have a new length (such as new signature length) and/or may have a different internal formatting (such as new internal format) and/or may have different content (such as a new signing algorithm used). Furthermore, a data element existing in the initial format (such as token type) may be missing (with or without replacement) or a new data element (such as masking value or token issuer) may be added in the new token version.

In advantageous variants, the secure token wallet is configured to only use the initial token version in transactions before the step of changing. The secure token wallet thus uses the initial token version, preferably being stored in the current token version data element, in transactions before the step of changing. It may have used older token versions previously, but now only uses the initial token version in transactions, particularly token reception and token sending . In addition or alternatively the secure token wallet is configured to only use the new token version in transactions at least after the transaction or after the step of changing. The token version of the secure token wallet preferably at least determines the token version of the tokens sent by the secure token wallet.

It should be noted that the new token version could be called the newer token version and the initial token version could be called the older token version. Prior to the initial token version other older token versions may have been used and/or after the new token version other newer token versions may be used in the future. Furthermore, in the transaction system an intermediate token version may exist or may have existed, which is newer than the initial token version but older than the new token version. Moreover, it should be noted that the token version preferably is always changed to a new(er) token version. The secure token wallet thus will not change (back) to a token version, which is older than the initial token version. In other words, the token version of the secure token wallet may be irreversibly changed towards new(er) token versions.

The secure token wallet may be configured to update the token exchange management unit. An initial token exchange management unit for exchanging initial tokens in transactions may be updated to a new token exchange management unit for exchanging new tokens or initial tokens in transactions. Preferably, the secure token wallet uses the initial token version after the step of updating the token exchange management unit and/or before the step of changing the current token version.

Preferably, the secure token wallet is configured to convert the, one or more, tokens of the secure token wallet from the initial token version to the new token version, particularly after the transaction. After the new version is detected, the secure token wallet will convert its token(s). The token conversion may be performed within the transaction and/or after the transaction. For example, in the transaction a token of the initial token version may be sent from the secure token wallet and after the transaction the one or more tokens of the secure token wallet are converted. In other examples a token of the new token version may be received (and stored) in the secure token wallet in the transaction. The token conversion could be performed after the transaction (preferred variant) or in the transaction (less preferred variant). In still another example, the secure token wallet sends a new token (of the new token version) in the transaction. The token conversion is performed for at least the new token to be sent (or all tokens) in the transaction, but could be performed for one or more further tokens after the transaction.

The secure token wallet may be configured to use one or more of the following three options for converting the token. The token could be converted by creating a token of the new version, registering the created token of the new version in the transaction system by sending a registration replacement request to the token register, the registration replacement request requesting to replace the token of the initial version, which is registered, by the registration of the created token of the new version. The token register preferably being a token reference register. The token also could be converted internally in the secure token wallet from the initial version to the new version. Furthermore, the token could be converted by sending the token of the initial version to an exchange unit of the transaction system and receiving the token of the new version from the exchange unit.

As already mentioned above, there are different token wallet types. In the transaction system token wallets of different token wallet types may exist. The secure token wallet may be a hardware wallet, a device wallet or a hosted wallet. The present approach is most favorable for hardware wallets and possibly even for device wallets (or a transaction system comprising a respective plurality thereof). The secure token wallet may be a hardware wallet. Examples for typical hardware wallets are smartcards, SIM cards, USB sticks, RFID elements or bluetooth tokens or other types of secure portable data carriers. Hardware wallets only comprise a local communication interface (i.e. no remote communication interface, e.g. for internet or mobile communication). They typically are configured to temporarily require external remote communication means. The secure token wallet may be a device wallet. The device wallet will include remote communication means ( e.g. for the internet and/or mobile communication networks). In the device wallet the token(s) and/or the token management unit are preferably provided in a dedicated secure element of the device - such as NFC element, embedded or integrated SIM or TPM module (trusted platform module) - or in a separate trusted execution environment (TEE) of the device. Moreover, the secure token wallet may be a hosted wallet of a wallet service provider unit. The wallet service provider unit preferably comprises a plurality of hosted customer wallets and/or a hosted service provider wallet and/or a token exchange management unit for the wallet service provider unit, i.e. a common token exchange management unit for at least the plurality of hosted customer wallets, and/or the current token version data element for the wallet service provider unit. For further details of a wallet service provider unit or for hosted token wallets, it can be referred to WO 2023/011758 A1 or WO 2023/011759 A1.

In preferred variants, the tokens of the transaction system are registered in a token register, more preferably in a token reference register. The token register registers the token of the transaction system. It however does not include the token. The token itself is stored in the token wallet. The token register may use a token reference for registering the token. The token issuer, preferably a bank, more preferably a central bank, may request registration of new tokens in the register and/or deletion of tokens from the register. Contrary to the token issuer, token wallets may only request token replacement in the token register. A token replacement request requests the registration of one or more registered token(s) to be replaced by a registration of one or more token(s) to be registered. A token replacement request may include the token reference(s) of the one or more registered tokens and token reference(s) of the one or more tokens to be registered.

In the transaction system token wallets may create one or more new tokens in a transaction based on one or more stored tokens. Token wallets may replace one or more stored tokens with one or more new tokens created, if the overall monetary value of these tokens is not changed (at least the sum of the monetary value(s) must be equal for stored and created tokens). For example, a new token having the monetary value required for the transaction can be created. A token may be split into tokens and/or tokens may be merged into token(s). For further details related to such splitting and/or merging and/or token replacement requests it is exemplary referred to WO 2020 / 212 331 A1 or WO 2023/011756 A1. Registration data, typically including a registration request for the new token(s) created in the transaction and may form a further data element of a token.

In variants the secure token wallet further comprises at least one of the following wallet data elements:
- a wallet ID, uniquely identifying the wallet in the transaction system; and/or
- a wallet authentication key; and/or
- a wallet certificate, preferably for the wallet ID and/or the wallet authentication key; and/or
- a code version indicating the version of the token exchange management unit code.

The token may be an asset token. The token may be a currency token. The token may be a central bank issued token, such as a CBDC. The token may be a digital currency token from other commercial issuers. In preferred variants the token comprises at least one of the following token data elements: a token secret, such as a secret key of token-individual token key pair comprising the token secret key and a token public key; and/or a monetary token value; and/or registration data for registering the token in the token register; and/or a token reference, preferably derived from the token secret, such as the token public key of the token-individual token key pair; and/or a signature, preferably of the token register confirming registration of the token and/or of the token issuer; and/or a token type.

In another aspect of the present solution there is provided an electronic transaction system, preferably a central bank digital currency system, comprises: at least one secure token wallet as described above and a token register, preferably a token reference register. The system may be further adapted as described above.

The transaction system preferably includes a first plurality of secure token wallets, being hardware wallets and/or device wallets, and/or a second plurality of secure token wallets, being hosted token wallets. The second plurality of secure token wallets is hosted on one or a multitude of wallet service provider unit(s).

The transaction system may include an exchange unit of the transaction system which is configured to receive token(s) of the initial version (or one or more older version(s)) from a secure token wallet and to send token(s) of the new(er) version back to the secure token wallet.

The transaction system may further include a token issuer unit. The token issuer unit may be configured to send creation requests and/or deletion requests to the token register in order to issue tokens into the transaction system or respectively to delete tokens from the transaction system. The token issuer unit may receive the tokens of the initial version for deletion from the wallet service provider unit(s) and/or the exchange unit.

In particular the transaction system and/or the token register temporarily supports at least the two token versions, the new token version and the initial token version, in parallel. A coexistence period starts when a first token wallet of the token wallets in the transaction system stores a token of the new(er) version and ends when the use of tokens of the initial token version is suspended. Thus a coexistence start point and a coexistence end point exists. At the coexistence end point few token wallets may still store token of the initial version. Before a coexistence start all wallets use tokens of the initial version (or older versions).

Still another aspect of the present solution is a method in an electronic transaction system, in which tokens are exchanged in transactions, the method comprising:
- providing a plurality of secure token wallets, the secure token wallets each storing one or more token of an initial token version and supporting the use of tokens of the initial token version and tokens of at least one new token version; and
- changing the token version used in the token wallets,
wherein each of the secure token wallets is configured to change the token version for the secure token wallet from the initial token version to the new(er) token version, if the new(er) token version is detected in a transaction.

The method for updating the token version in the secure token wallet and/or the transaction system may be further adapted as described above.

Moreover, the token issuer and/or the wallet service provider unit(s) may start the coexistence period by indicating in the transaction the use of the new version, e.g. sending a token of the new version and/or sending a corresponding token version information in the transaction. Preferably, at the coexistence start the token issuer and/or the wallet service provider unit(s) perform a multitude of version change triggering transactions. In particular when a version change triggering transaction is performed with one or more wallet service provider unit(s) the token version for the multitude(s) of hosted wallets of the respective wallet service provider unit(s) are changed early in the coexistence period. In addition or alternatively, transactions between hosted (service provider) wallets of the wallet service provider unit(s) and hardware wallets and/or device wallets may trigger the version change in the hardware wallets and/or device wallets.

In the following, the invention or further embodiments and advantages of the invention are explained in more detail based on drawings, wherein the drawings describe only embodiments of the invention. At least elements drawn with dashed lines are considered as optional elements.

The drawings are not to be regarded as true to scale, and individual elements of the drawings may be shown in exaggeratedly large or exaggeratedly simplified form.
Fig. 1 shows multiple token wallets of a known transaction system.
Fig. 2 shows an exemplary embodiment of a secure token wallet.
Fig. 3 shows data elements of a token.
Fig. 4 illustrates a method performed in an exemplary embodiment of a secure token wallet.
Fig. 5 shows a token register comprising tokens of different token versions.
Fig. 6 shows a wallet service provider unit comprising hosted token wallets.

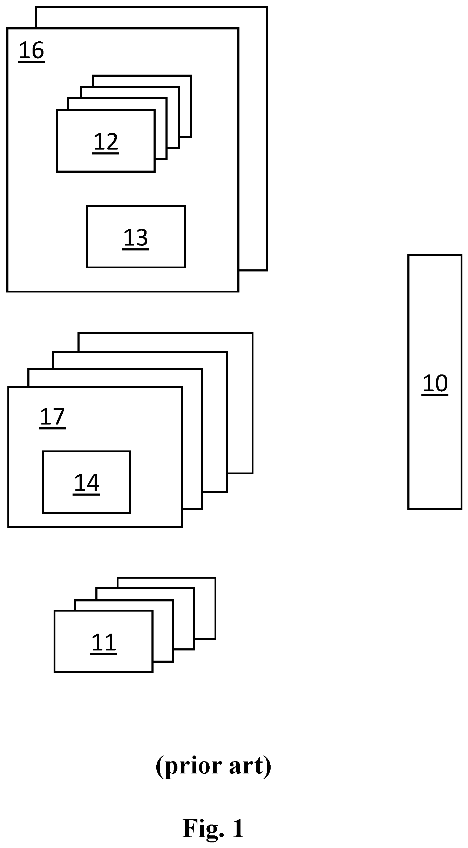

Fig. 1 shows an example of a transaction system, which comprises pluralities of token wallets 11-14 and a token register 10. The tokens of the transaction system are preferably digital currency tokens. The token register 10 registers the token of the transaction system. The tokens of the transaction system are however stored in the token wallets 11-14. Tokens will be exchanged between the wallets 11-14 in transactions of the transaction system.

The system includes a first plurality of hardware token wallets 11. Each of them including its token exchange management unit, but only having local communication means (not shown). A second plurality of device token wallets 14,17 comprises remote communication means (not shown). Typically, the device 17 comprises the remote communication means and a dedicated secure wallet 14 includes the tokens and optionally a token exchange management unit. The token exchange management unit may be provided in the device 17. A multitude of wallet service provider units 16 may exist in the system. Each wallet service provider unit 16 comprising a third plurality of hosted customer token wallets 12 and one or more hosted service provider wallet(s) 13. The wallet service provider unit 16 may comprise a common (or shared) token exchange management unit (not shown), which is common for (or shared by) at least the hosted customer token wallets 12 of the wallet service provider unit 16.

In the present solution the different wallet types shown in Fig. 1 may or may not be used and the token register 10 may be a part of the transaction system.

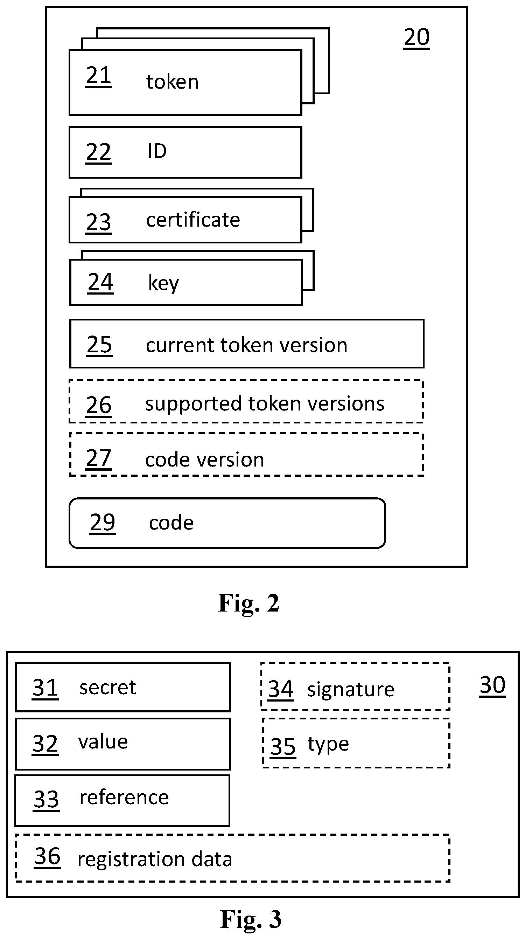

Fig. 2 illustrates details of a secure token wallet 20, which could be any of the token wallets 11-14. The secure token wallet 20 comprises one or more tokens 21 of the transaction system.

In the example of Fig. 2 the secure token wallet 20 comprises a current token version data element 25 indicating a token version of the secure token wallet 20. The secure token wallet 20 may use a first token version, which is referred to as the initial token version, and at least a second newer token version, which is referred to as the new(er) token version. Hence, the secure token wallet 20 supports more than one token version. However, it initially only uses and stores tokens 21 of the initial token version.

The secure token wallet 20 may further comprise data elements 22-27 and may comprise code 29. Not only due to the different wallet types, the data elements 22-27 and code 29 are optional. For example, either the token 21 could comprise a current token version data element of the token or the current token version is derived from the token, e.g. by its length, coding or ..., if required only, such that the current token version data element 25 of the secure token wallet may or may not be stored. In another example, a hosted token wallet or may not comprise wallet code 29, since the wallet code of the wallet service provider unit could be shared by the hosted wallets.

The secure token wallet 20 may comprise a supported token versions data element 26. It would store the information which token versions are supported. The supported token versions data element 26 thus indicates that at least the initial token version and the new token version are supported. For the wallet code 29 a wallet code version may be stored in a separate data element 27 of the sore token wallet 20.

A wallet ID 22 uniquely identifies the secure token wallet 20 in the transaction system. One or more wallet keys 24 of the secure token wallet 20, may have an associated certificate 23. The wallet key(s) 24 preferably is (are) a wallet secret key(s) of a wallet individual key pair(s), the key pair comprising the secret wallet key and a wallet public key. In addition one or more third party certificates 23 may be stored in the wallet. Furthermore, the wallet may either comprise a wallet ID certificate 23 for the wallet ID and/or the wallet ID may be a part of the wallet certificate 23. An wallet authentication key 24 and/or a wallet signing key 24 preferably are private keys of a public key pair, comprising a public key and the private key. A first wallet key (pair) 24 could be an authentication key, used in transactions to authenticate the secure token wallet 20 towards the other wallet of the transaction.

Examples for different token versions are now shortly explained with reference to Fig. 3. Fig. 3 illustrates details of a token 30, which could be any of the tokens 21 of Fig. 2. The token 30 comprises token data elements 31-36.

In the variant shown in Fig. 3, the token 30 comprises a token secret 31, a token value 32 and a token reference 33. The token 30 optionally and/or temporarily may comprise token registration data 36.

A version of the token used in the transaction system may have to be changed. For example, a new attack scenario, like quantum computing, becomes relevant for the cryptographic algorithm of the transaction system, such as elliptic curves or RSA or even AES. Hence, a new or adapted cryptographic algorithm shall be used in the future. The new or adapted cryptographic algorithm being more resilient against the attack scenario. It may be e.g. appropriate to increase the length of the token secret. With regard to quantum computing, an existing cryptographic algorithm, like an elliptic curve based, e.g. ECDSA, or RSA- based algorithm, may be replaced by a post-quantum algorithm, e.g. a lattice-based signature scheme, like FALCON (Fast-fourier lattice-based compact signatures over NTRU) or ML-DSA (Module-Lattice-based Digital Signature Algorithm) or an adapted ECDSA-scheme.

Accordingly, for example the length of the token secret 31 may change (increase or decrease) and/or the content of the token secret may change (e.g. from ECDSA key to FALCON key). The token reference 33 may or may not depend on the token secret 31 and thus could possibly also change.

Tokens of the new and the initial version thus may e.g. differ in at least one token data element, particularly in length of the data element and/or in format of the data element and/or in content of the data element and/ or in existence of the data element. In addition or alternatively the format of the token may change, e.g. from a fixed structure of the data elements in the token to a TLV structure (Tag/Length/Value) with one Tag per data element in the token.

Turning back to Fig. 3, the token 30 could further comprise a token signature 34 and/or a token type 35 as further data elements. The token 30 could theoretically comprise a token version data element of the token. In Fig. 3 and in the following it is however assumed that this token data element is not required.

The token value 32 indicates the monetary value of the token 30. The token secret 31 and the token reference 33 are token-individual token data elements. The token reference 33 uniquely identifies the token in the transaction system. The token secret 31 is used to create a signature, e.g. for a token replacement request send to the token register. In preferred variants, a token-individual public key pair comprises the token secret 31 (as the private key of the key pair) and the token reference 33 (as the public key of the key pair). In particular the token reference 33 may be calculatable from the token secret 31.

The token signature 34 could be a signature generated by the token register, e.g. upon registration of the token 30, or by the token issuer, e.g. upon issuance. A token type 35 could be e.g. used to identify the token issuer, if multiple issuers exists in the transaction system, or if special purpose tokens, e.g. for payment in a specific context, exists in the transaction system.

Token registration data 36 may be stored for the token until send to the token register. Token registration data 36 may include one more token registration replacement requests. Token registration data 36 are typically generated in offline transactions and may be exchanged as a part of the token in further (offline) transactions. Examples for possible details of such requests are given e.g. in WO 2023/011756 A1.

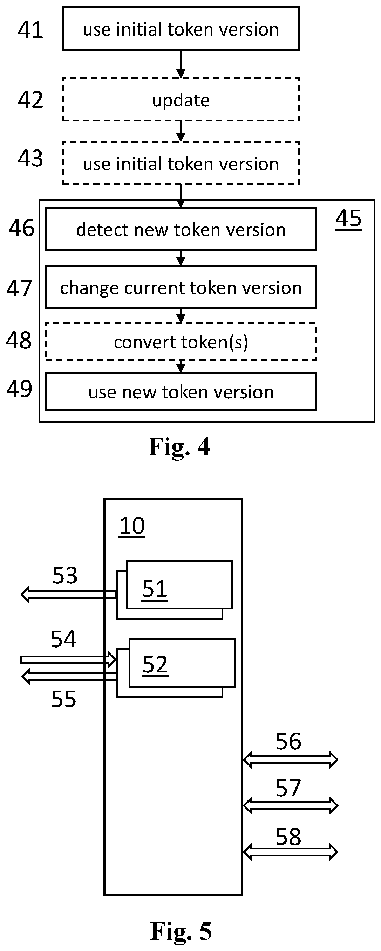

Fig. 4 illustrates steps 41-49 of a method in which the token version of a secure token wallet 11-14 is changed.

The secure token wallet initially uses 41 an initial token version. Hence, the tokens stored in the secure token wallet are tokens of the initial token version. Furthermore, in a token exchange with another token wallet of the transaction system the secure token wallet will exchange (send and/or receive) one or more tokens of the initial token version. The current version data element 25, which is preferably used, stores the token version information of the initial token version.

In particular if the secure token wallet is a hardware wallet 11 (or a device wallet 14), the secure token wallet when provided/issued usually already supports the initial token version and the new token version. Hence, their wallet code 29 already supports both token versions. For hosted wallets 12, 13 typically and for hardware wallets 11 and/or device wallets 14 optionally a step of updating 42 the wallet code 29 will occur. In the step of updating 42 the wallet code, optionally - if the data elements are used, the wallet code version 27 and/or the supported token versions 26 are updated as well. However, the secure token will still use 43 the initial token version. Hence, the current token version data element 25 will not be updated.

In a transaction 45, if the secure token wallet detects 46 the new(er) token version, it changes 47 the token version from the initial to the new(er) token version. The new token version of the secure token wallet may be stored in the current token version data element 25.

Preferably, the token wallets of a transaction, the secure token wallet and another (secure) token wallet, mutually exchange their token version information. If the received token version information is newer than the (current) token version of the secure token wallet and supported, the secure token wallet (or the other secure token wallet) will change 47 the token version from their initial token version to the newer token version detected in the transaction.

In step 46 the secure token wallet compares its current token version with the token version received. The secure token wallet will not change to older token versions. Furthermore, in step 47 the secure token wallet may compare the newer token version with the supported token version. The secure token wallet will not change to unsupported token versions.

The format of the token version is thus selected in order to support automatic comparison. The token version information stored in the current token version data element 25, the token version information received and optionally the token version information in the supported token versions 26 are formatted accordingly. The token version may for example be stored in one or more bytes, wherein only one bit is set to 1. Hence, eight versions could be coded per byte (0x01, 0x02, 0x04, 0x08, 0x10, 0x20, 0x40, 0x80). Newer token versions having a higher one of the bits set to 1. Preferably, different token version information can be compared by subtraction. In a preferred option, the token version information includes at least two bytes (n bytes), wherein the lowest byte can be disregarded in the supported version comparison. The supported token versions are coded in n-1 bytes. For example, token version "0x01 0x03" or "0x01 0x02 0x02" is newer than an initial token version "0x01 0x02" or "0x01 0x02, 0x01" but the two upper bytes relevant for the supported token versions "0x01" or "0x01 0x02" are identical. Hence, the supported token version 26 may include one or more supported token version information entries and/or a shortened token version information range for indicating a range of supported token versions.

After the secure token wallet 11-14 has changed 47 its token version to the new token version, the secure token wallet will use 49 the new token version (not only in the transaction 45). The tokens 21 of the secure token wallet 11-14 have to be converted 48 from the initial token version to the new token version. The conversion 48 may be performed in the transaction 45 or after the transaction 45. For example, if the secure token wallets receives one or more tokens of the new token version in the transaction 45, the stored tokens of the initial version can be converted later. If the secure token wallet sends one or more tokens of the new token version in the transaction 45, at least those (or all) tokens have been previously converted 48. However, further tokens of the secure token wallet may be converted later, after the transaction 45.

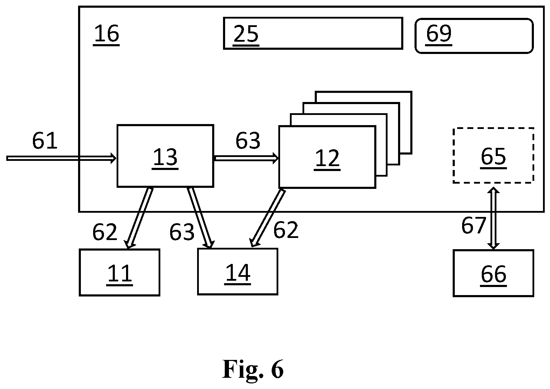

At least three different variants may be used for conversion. In a first variant the token can be simply internally converted from the initial token version into the new token version. In a second variant the secure token wallet uses a token replacement request to the token register for the conversion. The secure token wallet internally creates one or more token of the new token version and sends a replacement request to the token register, requesting the token register to replace the registration of the one or more tokens of the initial version of the secure token wallet by a registration of the one or more created tokens of the new token version. Examples for possible details of such requests are given e.g. in WO 2020/212331 A1 or WO 2023/011756 A1. In a third variant the secure token wallet uses a token exchange or conversion service for the conversion. The secure token wallet sends one or more tokens of the initial token version to the token exchange or conversion service and receives back one or more tokens of the new token version correspondingly. The token exchange or conversion service will be preferably provided by an external token exchange or conversion service. For hosted token wallets 12, 13 of a wallet service provider unit 16, a token exchange or conversion service of the wallet service provider unit 16 may be used, as will be explained in more detail with respect to Fig. 6 below.

Fig. 5 show a token register 10 in a coexistence period, in which tokens of a new token version and tokens of an initial token version are used in the transaction system. The token register 10 illustrated in Fig. 5 is a token reference register. It stores token references 51 for tokens of the initial token version and token references 52 for tokens of the new token version. At least the monetary value of the respective token is stored together with the token references 51, 52. Only a token issuer (not shown) of the transaction system may create or delete tokens in the transaction system. Accordingly, in the token register creation or deletion requests 53-55 send to the token register will be accepted only from the token issuer. Typically, a token issuer signature is checked in this regard. Wallets may send token (reference) replacement requests 56 -58 to the token register 10.

In the coexistence period the token issuer will send creation requests 54 and/or deletion requests 55 for tokens of the new token version. Token references 52 will accordingly be added to or deleted from the token register 10. In the coexistence period the token issuer will however not send creation requests for tokens of the initial token version but deletion requests 53 for tokens of the initial token version. Token references 51 of the tokens of the old token version will then be deleted from the token register 10 as requested. In the coexistence period the token register accepts token replacement requests 56 requesting registration replacement for tokens of the initial token version only, token replacement requests 57 requesting registration replacement for tokens of the initial token version to tokens of the new token version and token replacement requests 58 requesting registration replacement for tokens of the new token version only.

Prior to the coexistence period the token register 10 only accepted creation requests and/or deletion requests 53 for tokens of the initial token version and token replacement requests 56 for tokens of the initial token version. After the coexistence period the token register 10 will not accept token replacement requests 56, 57 anymore. It will however further accept deletion requests 53 from the token issuer, at least until all token references 51 for tokens of the initial token version have been deleted.

Fig. 6 shows a wallet service provider unit 16 comprising multiple secure hosted token wallets 12,13. Transactions 61-63 for the token wallets 12, 13 are indicated. Token version change triggering transactions 61, 62 and normal transactions 63 (not triggering a token version change) will be described in more detail below.

The wallet service provider unit 16 comprises a current token version data element 25 of the wallet service provider unit 16, which is the token version for at least the hosted customer wallets 12 and in at least one example discussed now also for the hosted service provider wallet(s) 13.

The wallet service provider unit 16 may comprise a token exchange management unit 69 (or wallet code). This wallet code 69 is used for at least the hosted customer wallets 12 and optionally also for the hosted service provider wallet(s) 13. Hence, a single wallet code update for the wallet code 69 of the wallet service provider unit 16 is required for all hosted wallets 12 (,13).

In the transaction system the token issuer may initiate the coexistence period. The token issuer for example could initiate the change of the token versions, e.g. after the majority of the secure token wallets 11-14 in the transaction system, preferably more than 70% of the hardware and device wallets, support the new token version (via updates or wallet re-issuances).

Preferably, the token issuer uses tokens of the new version in at least one or multiple change triggering transaction(s) 61 with wallet service provider unit(s) 16. The secure hosted service provider wallet 13 via the wallet code 69 detects the new token version in the transaction 61, e.g. in the received token version information of the token issuer wallet. However, now the token version is changed (not only for a single token wallet but) for the wallet service provider unit 16. The current token version data element 25 of the wallet service provider unit 16 is changed from the initial token version to the new token version. Consequently, the token version of all hosted token wallets 12,13 of the wallet service provider unit 16 has been changed. The tokens of these hosted token wallets 12, 13 will be converted as described above.

By sending a multitude, x, of triggering transactions to x wallet service provider units 16, each comprising more than y hosted token wallets, early in the coexistence period, x*y wallets have already changed the token version.

Subsequent transactions 62 of the hosted token wallets 12,13 with external secure token wallets 11,14 still using the initial token version will trigger a further change of the token version.

In a subsequent (normal) transaction 63 between the hosted service provider wallet 13 and a hosted customer wallet 12 token of the new token version will be used (but no change is triggered). As further illustrated in Fig. 6 device token wallet 14 has changed the token version due to transaction 62 already, such that subsequently a normal transaction 63 between the hosted service provider wallet 13 and the device token wallet 14 exchanges tokens of the new token version.

Finally, Fig. 6 further illustrates that the wallet service provider unit 16 may comprise a token exchange (or conversion) unit 65. The token exchange (or conversion) unit 65 may provide an exchange (or conversion) service 67 for external wallets 11, 14, 66 or internally for the hosted wallets 12, 13 of the wallet service provider unit 16. As described above a secure token wallet 11-14, 66 may send token(s) of the initial token version and receive back token(s) of the new token version. An internal use of the token exchange (or conversion) unit 65 may enable hosted token wallets 12, 13 to send or receive tokens of the initial token version in transactions with other wallets not supporting the new token version. The token exchange service 67 will however be provided during the coexistence period only.

### REFERENCE SIGNS

- 10: token reference register
- 11: hardware token wallet
- 12, 13: hosted token wallet
- 14: device token wallet
- 16: wallet service provider unit
- 17: device

- 20: wallet
- 21: token
- 22: wallet-ID
- 23: wallet certificate
- 24: wallet key
- 25: current token version
- 26: supported token versions
- 27: wallet code version
- 29: wallet code

- 30: token
- 31: token secret
- 32: token value
- 33: token reference
- 34: token signature
- 35: token type
- 36: registration data

- 41, 43: use initial token version
- 42: update wallet code
- 45: token exchange
- 46: detect new token version
- 47: change current token version
- 48: convert token(s)
- 49: use new token version

- 51: token reference - initial version
- 52: token reference - new version
- 53, 55: delete token reference
- 54: create token reference
- 56: replace initial-to-initial version
- 57: replace initial-to-new version
- 58: replace new-to-new version

- 61, 62: token version change triggering transaction
- 63: transaction
- 65: token conversion unit
- 67: token conversion service
- 69: wallet code

## Claims

1. A secure token wallet (11-14) of a transaction system, comprising:
- a token (21) of the transaction system, wherein a token version of the token (21) is an initial token version; and
- a token exchange management unit (29) for exchanging tokens in transactions; wherein a token version for the secure token wallet (11-14) can be changed from the initial token version to a new token version;
**characterized in that**
the secure token wallet (11-14) is configured to change (47) the token version for the secure token wallet (11-14), if the new token version is detected (46) in a transaction (45).

2. The secure token wallet (11-14) of claim 1, wherein the secure token wallet (11-14) further comprises a current token version data element (25), which indicates the currently used token version of the secure token wallet (11-14).

3. The secure token wallet (11-14) of any of the preceding claims, wherein the secure token wallet (11-14), in a preparation phase (46, 47) of the transaction with another wallet,
- detects that the other wallet uses the new token version already; and/or
- receives a token version information from the other wallet.

4. The secure token wallet (11-14) of any of the preceding claims, wherein the secure token wallet (11-14) is configured to
before the step of changing (47) only use the initial token version in transactions; and/or
after the transaction or after the step of changing (47) only use the new token version in transactions.

5. The secure token wallet (11-14) of any of the preceding claims, wherein
two, three or more different token versions are usable in parallel in the transaction system;
token versions can be compared to determine a newer one of the compared token versions; and/or
tokens of the new and initial version differ in at least one token data element, particularly in length and/or in format and/or in content and/or in existence thereof.

6. The secure token wallet (11-14) of any of the preceding claims, wherein the secure token wallet (11-14) is configured to update (42) the token exchange management unit (29), in particular from an initial token exchange management unit for exchanging initial tokens in transactions to the new token exchange management unit for exchanging new tokens and optionally initial tokens in transactions, wherein preferably the secure token wallet (11-14) uses (43) the initial token version after the step of updating (42) and/or before the step of changing (47) the current token version.

7. The secure token wallet (11-14) of any of the preceding claims, wherein the secure token wallet (11-14) is configured to convert (48) the, one or more, token (21) of the secure token wallet (11-14) from the initial token version to the new token version.

8. The secure token wallet (11-14) of claim 7, wherein the secure token wallet (11-14) is configured in the step of converting (48) the token (21) to:
- create a token of the new version and to register the created token of the new version in the transaction system by sending a registration replacement request to the token register, the request requesting to replace the registered token of the initial version by the registration of the created token of the new version; or
- internally convert the token from the initial version to the new version; or
- send the token of the initial version to an exchange unit (69) of the transaction system and receive the token of the new version from the exchange unit (69).

9. The secure token wallet (11-14) of any of the preceding claims, wherein the secure token wallet (11-14) is a hardware wallet (11) or a device wallet (14).

10. The secure token wallet (11-14) of any of the preceding claims, wherein the secure token wallet (11-14) is a hosted wallet (12, 13) of a wallet service provider unit (16); the wallet service provider unit (16) preferably comprising:
- a plurality of hosted customer wallets (12), and/or
- a hosted service provider wallet (13), and/or
- the token exchange management unit (69) for the wallet service provider unit (16), and/or
- the current token version data element (25) for the wallet service provider unit (16).

11. The secure token wallet (11-14) of any of the preceding claims, wherein the tokens of the transaction system are registered in a token register (10).

12. The secure token wallet (11-14) of any of the preceding claims, wherein the secure token wallet (11-14) further comprises at least one of the following wallet data elements:
- a wallet ID (22), uniquely identifying the wallet in the transaction system; and/or
- a wallet authentication key (24); and/or
- a wallet certificate (23), preferably for the wallet ID (22) and/or the wallet authentication key (24); and/or
- a code version (27) indicating the version of the token exchange management unit code.

13. The secure token wallet (11-14) of any of the preceding claims, wherein the token comprises at least one of the following token data elements:
- a token secret (31); and/or
- a monetary token value (32); and/or
- registration data (36) for registering the token in the token register; and/or
- a token reference (33), preferably derived from the token secret (31); and/or
- a signature (34), preferably of the token register confirming registration of the token and/or of the token issuer; and/or
- a token type (35).

14. An electronic transaction system, comprising:
- at least one secure token wallet (11-14) according to any of the preceding claims 1 to 13;
- a token register (10), preferably a token reference register.

15. A method in an electronic transaction system, in which tokens are exchanged in transactions, comprising the steps:
- providing a plurality of token wallets (11-14), the token wallets (11-14) each storing one or more token (21) of an initial token version and supporting the use of tokens of the initial token version and tokens of at least one new token version;
- changing the token version used in the token wallets (11-14),
wherein each of the secure token wallets (11-14) is configured to change (47) the token version for the secure token wallet (11-14), if the new token version is detected (46) in a transaction (45).

## Patentansprüche

1. Sicheres Token-Wallet (11-14) eines Transaktionssystems, umfassend:
- einen Token (21) des Transaktionssystems, wobei eine Token-Version des Tokens (21) eine anfängliche Token-Version ist; und
- eine Token-Austausch-Verwaltungseinheit (29) zum Austauschen von Tokens in Transaktionen; wobei eine Token-Version für das sichere Token-Wallet (11-14) von der anfänglichen Token-Version zu einer neuen Token-Version geändert werden kann;
**dadurch gekennzeichnet, dass**
das sichere Token-Wallet (11-14) dazu ausgelegt ist, die Token-Version für das sichere Token-Wallet (11-14) zu ändern (47), falls die neue Token-Version in einer Transaktion (45) detektiert wird (46).

2. Sicheres Token-Wallet (11-14) nach Anspruch 1, wobei das sichere Token-Wallet (11-14) ferner ein aktuelles Token-Versionsdatenelement (25) umfasst, das die aktuell verwendete Token-Version des sicheren Token-Wallets (11-14) angibt.

3. Sicheres Token-Wallet (11-14) nach einem der vorstehenden Ansprüche, wobei das sichere Token-Wallet (11-14) in einer Vorbereitungsphase (46, 47) der Transaktion mit einem anderen Wallet
- detektiert, dass das andere Wallet schon die neue Token-Version verwendet; und/oder
- eine Token-Versionsinformation von dem anderen Wallet empfängt.

4. Sicheres Token-Wallet (11-14) nach einem der vorstehenden Ansprüche, wobei das sichere Token-Wallet (11-14) ausgelegt ist zum
vor dem Schritt des Änderns (47), Verwenden von nur der anfänglichen Token-Version in Transaktionen; und/oder
nach der Transaktion oder nach dem Schritt des Änderns (47), Verwenden von nur der neuen Token-Version in Transaktionen.

5. Sicheres Token-Wallet (11-14) nach einem der vorstehenden Ansprüche, wobei
zwei, drei oder mehr unterschiedliche Token-Versionen parallel im Transaktionssystem verwendbar sind;
Token-Versionen verglichen werden können, um eine neuere der verglichenen Token-Versionen zu bestimmen; und/oder sich Tokens der neuen und anfänglichen Version in mindestens einem Token-Datenelement unterscheiden, insbesondere in Länge und/oder Format und/oder Inhalt und/oder dessen Vorhandensein.

6. Sicheres Token-Wallet (11-14) nach einem der vorstehenden Ansprüche, wobei das sichere Token-Wallet (11-14) dazu ausgelegt ist, die Token-Austausch-Verwaltungseinheit (29) zu aktualisieren (42), insbesondere von einer anfänglichen Token-Austausch-Verwaltungseinheit zum Austauschen anfänglicher Tokens in Transaktionen zu der neuen Token-Austausch-Verwaltungseinheit zum Austauschen neuer Tokens und optional anfänglicher Tokens in Transaktionen, wobei vorzugsweise das sichere Token-Wallet (11-14) die anfängliche Token-Version nach dem Schritt des Aktualisierens (42) und/oder vor dem Schritt des Änderns (47) der aktuellen Token-Version verwendet (43).

7. Sicheres Token-Wallet (11-14) nach einem der vorstehenden Ansprüche, wobei das sichere Token-Wallet (11-14) dazu ausgelegt ist, den einen oder die mehreren Tokens (21) des sicheren Token-Wallets (11-14) von der anfänglichen Token-Version zu der neuen Token-Version umzuwandeln (48).

8. Sicheres Token-Wallet (11-14) nach Anspruch 7, wobei das sichere Token-Wallet (11-14) in dem Schritt des Umwandelns (48) des Tokens (21) ausgelegt ist zum:
- Erzeugen eines Tokens der neuen Version und Registrieren des erzeugten Tokens der neuen Version im Transaktionssystem durch Senden einer Registrierungsersetzungsanforderung an das Token-Register, wobei die Anforderung anfordert, den registrierten Token der anfänglichen Version durch die Registrierung des erzeugten Tokens der neuen Version zu ersetzen; oder
- internen Umwandeln des Tokens von der anfänglichen Version zu der neuen Version; oder
- Senden des Tokens der anfänglichen Version an eine Austauscheinheit (69) des Transaktionssystems und Empfangen des Tokens der neuen Version von der Austauscheinheit (69).

9. Sicheres Token-Wallet (11-14) nach einem der vorstehenden Ansprüche, wobei das sichere Token-Wallet (11-14) ein Hardware-Wallet (11) oder ein Vorrichtungs-Wallet (14) ist.

10. Sicheres Token-Wallet (11-14) nach einem der vorstehenden Ansprüche, wobei das sichere Token-Wallet (11-14) ein gehostetes Wallet (12, 13) einer Wallet-Dienstanbietereinheit (16) ist; wobei die Wallet-Dienstanbietereinheit (16) vorzugsweise umfasst:
- eine Vielzahl gehosteter Kunden-Wallets (12), und/oder
- ein gehostetes Dienstanbieter-Wallet (13), und/oder
- die Token-Austausch-Verwaltungseinheit (69) für die Wallet-Dienstanbietereinheit (16), und/oder
- das aktuelle Token-Versionsdatenelement (25) für die Wallet-Dienstanbietereinheit (16).

11. Sicheres Token-Wallet (11-14) nach einem der vorstehenden Ansprüche, wobei die Tokens des Transaktionssystems in einem Token-Register (10) registriert sind.

12. Sicheres Token-Wallet (11-14) nach einem der vorstehenden Ansprüche, wobei das sichere Token-Wallet (11-14) ferner mindestens eines der folgenden Wallet-Datenelemente umfasst:
- eine Wallet-ID (22), die das Wallet im Transaktionssystem eindeutig identifiziert; und/oder
- einen Wallet-Authentifizierungsschlüssel (24); und/oder
- ein Wallet-Zertifikat (23), vorzugsweise für die Wallet-ID (22) und/oder den Wallet-Authentifizierungsschlüssel (24); und/oder
- eine Codeversion (27), die die Version des Token-Austausch-Verwaltungseinheitscodes angibt.

13. Sicheres Token-Wallet (11-14) nach einem der vorstehenden Ansprüche, wobei der Token mindestens eines der folgenden Token-Datenelemente umfasst:
- ein Token-Geheimnis (31); und/oder
- einen monetären Token-Wert (32); und/oder
- Registrierungsdaten (36) zum Registrieren des Tokens im Token-Register; und/oder
- eine Token-Referenz (33), die vorzugsweise aus dem Token-Geheimnis (31) abgeleitet wird; und/oder
- eine Signatur (34), vorzugsweise des Token-Registers, die die Registrierung des Tokens und/oder des Token-Ausstellers bestätigt; und/oder
- einen Token-Typ (35).

14. Elektronisches Transaktionssystem, umfassend:
- mindestens ein sicheres Token-Wallet (11-14) nach einem der vorstehenden Ansprüche 1 bis 13;
- ein Token-Register (10), vorzugsweise ein Token-Referenzregister.

15. Verfahren in einem elektronischen Transaktionssystem, in dem Tokens in Transaktionen ausgetauscht werden, umfassend die folgenden Schritte:
- Bereitstellen einer Vielzahl von Token-Wallets (11-14), wobei die Token-Wallets (11-14) jeweils einen oder mehrere Tokens (21) einer anfänglichen Token-Version speichern und die Verwendung von Tokens der anfänglichen Token-Version und Tokens mindestens einer neuen Token-Version unterstützen;
- Ändern der Token-Version, die in den Token-Wallets (11-14) verwendet wird,
wobei jedes der sicheren Token-Wallets (11-14) dazu ausgelegt ist, die Token-Version für das sichere Token-Wallet (11-14) zu ändern (47), falls die neue Token-Version in einer Transaktion (45) detektiert wird (46).

## Revendications

1. Portefeuille de jetons sécurisé (11-14) d'un système de transaction, comprenant :
- un jeton (21) du système de transaction, où une version du jeton (21) est une version initiale de jeton ; et
- une unité de gestion d'échange de jetons (29) pour l'échange de jetons dans des transactions ; une version de jeton pour le portefeuille de jetons sécurisé (11-14) pouvant être modifiée de la version initiale de jeton à une nouvelle version de jeton ;
**caractérisé en ce que**
le portefeuille de jetons sécurisé (11-14) est configuré pour modifier (47) la version de jeton pour le portefeuille de jetons sécurisé (11-14), si la nouvelle version de jeton est détectée (46) dans une transaction (45).

2. Portefeuille de jetons sécurisé (11-14) selon la revendication 1, lequel portefeuille de jetons sécurisé (11-14) comprend en outre un élément de données de version de jeton courante (25), qui indique la version de jeton actuellement utilisée du portefeuille de jetons sécurisé (11-14).

3. Portefeuille de jetons sécurisé (11-14) selon l'une quelconque des revendications précédentes, lequel portefeuille de jetons sécurisé (11-14), dans une phase de préparation (46, 47) de la transaction avec un autre portefeuille,
- détecte que l'autre portefeuille utilise déjà la nouvelle version de jeton ; et/ou
- reçoit des informations de version de jeton en provenance de l'autre portefeuille.

4. Portefeuille de jetons sécurisé (11-14) selon l'une quelconque des revendications précédentes, lequel portefeuille de jetons sécurisé (11-14) est configuré pour,
avant l'étape de modification (47), n'utiliser que la version initiale de jeton dans des transactions ; et/ou après la transaction ou après l'étape de modification (47), n'utiliser que la nouvelle version de jeton dans des transactions.

5. Portefeuille de jetons sécurisé (11-14) selon l'une quelconque des revendications précédentes, dans lequel deux, trois versions de jeton différentes, ou plus, peuvent être utilisées en parallèle dans le système de transaction ;
des versions de jeton peuvent être comparées pour déterminer la plus récente parmi les versions de jeton comparées ; et/ou
des jetons de la nouvelle version et de la version initiale différant dans au moins un élément de données de jeton, en particulier leur longueur et/ou leur format et/ou leur contenu et/ou leur existence.

6. Portefeuille de jetons sécurisé (11-14) selon l'une quelconque des revendications précédentes, lequel portefeuille de jetons sécurisé (11-14) est configuré pour mettre à jour (42) l'unité de gestion d'échange de jetons (29), en particulier d'une unité de gestion d'échange de jetons initiaux pour l'échange de jetons initiaux dans des transactions vers l'unité de gestion d'échanges de nouveaux jetons pour l'échange de nouveaux jetons et, éventuellement, de jetons initiaux dans des transactions, le portefeuille de jetons sécurisé (11-14) utilisant (43), de préférence, la version initiale de jeton après l'étape de mise à jour (42) et/ou avant l'étape de modification (47) de la version de jeton courante.

7. Portefeuille de jetons sécurisé (11-14) selon l'une quelconque des revendications précédentes, lequel portefeuille de jetons sécurisé (11-14) est configuré pour convertir (48) les, un ou plusieurs, jetons (21) du portefeuille de jetons sécurisé (11-14) de la version initiale de jeton en la nouvelle version de jeton.

8. Portefeuille de jetons sécurisé (11-14) selon la revendication 7, lequel portefeuille de jetons sécurisé (11-14) est configuré pour, dans l'étape de conversion (48) du jeton (21) :
- créer un jeton de la nouvelle version et enregistrer le jeton créé de la nouvelle version dans le système de transaction en envoyant une demande de remplacement d'enregistrement au registre de jetons, la demande demandant de remplacer le jeton enregistré de la version initiale par l'enregistrement du jeton créé de la nouvelle version ; ou
- convertir en interne le jeton de la version initiale en la nouvelle version ; ou
- envoyer le jeton de la version initiale à une unité d'échange (69) du système de transaction et recevoir le jeton de la nouvelle version en provenance de l'unité d'échange (69).

9. Portefeuille de jetons sécurisé (11-14) selon l'une quelconque des revendications précédentes, lequel portefeuille de jetons sécurisé (11-14) est un portefeuille matériel (11) ou un portefeuille électronique (14).

10. Portefeuille de jetons sécurisé (11-14) selon l'une quelconque des revendications précédentes, lequel portefeuille de jetons sécurisé (11-14) est un portefeuille hébergé (12, 13) d'une unité de fourniture de service de portefeuille (16) ; l'unité de fourniture de service de portefeuille (16) comprenant de préférence :
- une pluralité de portefeuilles clients hébergés (12), et/ou
- un portefeuille de fournisseur de service hébergé (13), et/ou
- l'unité de gestion d'échange de jetons (69) pour l'unité de fourniture de service de portefeuille (16), et/ou
- l'élément de données de version de jeton courante (25) pour l'unité de fournisseur de service de portefeuille (16).

11. Portefeuille de jetons sécurisé (11-14) selon l'une quelconque des revendications précédentes, dans lequel les jetons du système de transaction sont enregistrés dans un registre de jetons (10).

12. Portefeuille de jetons sécurisé (11-14) selon l'une quelconque des revendications précédentes, dans lequel le portefeuille de jetons sécurisé (11-14) comprend en outre au moins l'un des éléments de données de portefeuille suivants :
- un ID de portefeuille (22), identifiant de manière unique le portefeuille dans le système de transaction ; et/ou
- une clé d'authentification de portefeuille (24) ; et/ou
- un certificat de portefeuille (23), de préférence pour l'ID de portefeuille (22) et/ou la clé d'authentification de portefeuille (24) ; et/ou
- une version de code (27) indiquant la version du code de l'unité de gestion d'échange de jetons.

13. Portefeuille de jetons sécurisé (11-14) selon l'une quelconque des revendications précédentes, dans lequel le jeton comprend au moins l'un des éléments de données de portefeuille suivants :
- un secret de jeton (31) ; et/ou
- une valeur de jeton monétaire (32) ; et/ou
- des données d'enregistrement (36) pour l'enregistrement du jeton dans le registre de jetons ; et/ou
- une référence de jeton (33), déduite de préférence du secret de jeton (31) ; et/ou
- une signature (34), de préférence du registre de jetons confirmant l'enregistrement du jeton et/ou de l'émetteur du jeton ; et
- un type de jeton (35).

14. Système de transaction électronique, comprenant :
- au moins un portefeuille de jetons sécurisé (11-14) selon l'une quelconque des revendications précédentes 1 à 13 ;
- un registre de jetons (10), de préférence un registre de référence de jetons.

15. Procédé d'un système de transactions électronique, dans lequel des jetons sont échangés dans des transactions, comprenant les étapes de :
- fourniture d'une pluralité de portefeuilles de jetons (11-14), les portefeuilles de jetons (11-14) stockant chacun un ou plusieurs jetons (21) d'une version initiale de jeton et prenant en charge l'utilisation de jetons de la version initiale de jeton et de jetons d'au moins une nouvelle version de jeton ;
- modification de la version de jeton utilisée dans les portefeuilles de jetons (11-14),
chacun des portefeuilles de jetons sécurisés (11-14) étant configuré pour modifier (47) la version de jeton pour le portefeuille de jetons sécurisé (11-14), si la nouvelle version de jeton est détectée (46) dans une transaction (45).
